# EUROPÄISCHE PATENTSCHRIFT

(11) **EP 3 212 010 B1**
(45) Veröffentlichungstag und Bekanntmachung des Hinweises auf die Patenterteilung: **12.09.2018**
(21) Anmeldenummer: 15767165.2
(22) Anmeldetag: 24.09.2015
(51) Int. Cl.: A23L 3/36

(54) **FERTIGMENÜPACKUNG**
READY MEAL PACKAGING
EMBALLAGE POUR PLATS CUISINÉS

(30) Priorität: 30.10.2014 DE 102014115790
(43) Veröffentlichungstag der Anmeldung: 06.09.2017
(73) Patentinhaber: Swiss Medical Food AG, 9050 Appenzell (CH)
(72) Erfinder: KORSTEN, Gerd, CH-9050 Appenzell (CH)
(74) Vertreter: Goddar, Heinz J.
(86) Internationale Anmeldenummer: PCT/EP2015/071943
(87) Internationale Veröffentlichungsnummer: WO 2016/066340

(56) Entgegenhaltungen:
- DE-C1- 19 748 307
- DE-U1- 9 105 684
- US-A1- 2012 052 162

## Beschreibung

Die Erfindung betrifft eine Fertigmenüpackung mit einem im Wesentlichen kreisschalenförmigen Basisteil, dessen umlaufende Seitenwand von einem im Wesentlichen ebenen Boden zu ihrer Oberkannte nach außen divergiert und an ihrem oberen Rand in einen nach außen vorstehenden, im Wesentlichen ebenen, zum Boden parallelen Randflansch übergeht; einem in das Basisteil eingefüllten, mindestens zwei tiefgefrorene Komponenten unterschiedlicher Nährstoffzusammensetzung aufweisenden, vorzugsweise vorgegarten Fertigmenü und einer nach dem Einfüllen des Fertigmenüs auf den Randflansch aufgesiegelten Siegelfolie oder dergleichen.

Aus der DE 197 48 307 ist eine Fertigmenüpackung dieser Art bekannt, bei der die einzelnen Nahrungsmittelkomponenten erst nach dem Einfüllen in das Basisteil tiefgefroren werden und alsdann im Wesentlichen homogene Kreisscheibenform haben. Die einzelnen Komponenten unterscheiden sich dabei in ihrer Zusammensetzung, indem nämlich beispielsweise eine der Komponenten aus einem festen Nahrungsmittel, wie Spaghetti, besteht, während die beiden anderen Komponenten aus unterschiedlichen Soßen hergestellt sein können. Charakteristisch ist dabei jedoch insgesamt, dass die Nahrungsmittelkomponenten in das Basisteil in im Wesentlichen ungeformtem Zustand eingefüllt werden, wobei das Tiefgefrieren des auf diese Weise vorgefertigten Fertigmenüs erst nach dem Einfüllen der Nahrungsmittelkomponenten erfolgt.

Insgesamt sind also bei der bekannten Fertigmenüpackung die einzelnen Nahrungsmittelkomponenten schichtartig, aber innerhalb der Schichten im Wesentlichen homogen, aufgebaut, wobei sie durchaus unterschiedliche Nährstoffzusammensetzungen haben können.

Es hat sich bei der diätetischen Nährmittelbehandlung von Patienten, insbesondere krebskranken Patienten, als wünschenswert herausgestellt, zumindest eine der Hauptmahlzeiten durch ein Fertigmenü zu ersetzen, welches eine in gewünschter Weise wohldefinierte Nährstoffzusammensetzung hat, wobei insbesondere der Kohlenhydratgehalt abgesenkt sein soll.

Das bekannte Fertigmenü nach dem Stand der Technik eignet sich für derartige Anwendungszwecke nicht, da die einzelnen Schichten in Folge der dort vorgesehenen Herstellungsweise, bei der also die verschiedenen Nahrungsmittelkomponenten schichtweise in das Basisteil eingefüllt und dieses dann anschließend erst einem Tiefkühlvorgang unterworfen wird, nicht in gewünschter Weise aufeinander abgestimmt werden können.

Aus der EP 0 930 021 A1 ist eine Fertigmenüpackung bekannt, bei der vorgefrorene Nahrungsmittelkomponenten nebeneinander auf einem Basisteil abgelegt und mit zusätzlich mindestens einem Soßenbestandteil palettenartig tiefgefroren werden.

Die JP 2002-209564 A betrifft eine mehrkomponentige Fertigmenüanordnung, die kein "narrensicheres" Zusammenstellen des gewünschten Fertigmenüs unter Verwendung komplementär zueinander geformter Fertigmenükomponenten in vorgefrorenem Zustand erlaubt.

Der Erfindung liegt die Aufgabe zugrunde, eine Fertigmenüpackung der gattungsgemäßen Art und ein Verfahren zu ihrer Herstellung zu schaffen, bei der/dem gewährleistet ist, dass unter Erzielung einer schmackhaften Gesamtmenüzusammensetzung mittels einer derartigen Fertigmenüpackung eine zumindest teilweise diätetische, nährstoffoptimierte Diätbehandlung von insbesondere Krebspatienten ermöglicht wird, wobei ferner unter Verwendung einer derartigen Fertigmenüpackung eine nährstoffoptimierte Diätbehandlung von insbesondere an Krebs erkrankten Patienten ermöglicht werden soll.

Erfindungsgemäß wird diese Aufgabe bei einer Fertigmenüpackung der eingangs genannten Art dadurch gelöst, dass die Nahrungsmittelkomponenten im Wesentlichen tortenstückartige Kreissegmentform haben und in Form und Größe derart aufeinander und auf die Innengestalt des Basisteils abgestimmt sind, dass sie nach dem Vorformen und Tiefgefrieren beim Einlegen in das Basisteil, mit ihren kreissekantenartig verlaufenden, zum Boden senkrechten Seitenkanten bündig aneinander liegend, im wesentlichen den Boden des Basisteiles vollständig und lückenlos bedecken, mit ihren gebogenen Seitenflächen an der divergierenden Seitenwand des Basisteiles anstoßen und den Schaleninnenraum in Richtung des oberen Randes der Seitenwand nicht überragen.

Dabei kann vorgesehen sein, dass die kreissegmentförmigen Nahrungsmittelkomponenten nach dem Einlegen in das Basisteil mit der Oberkante der Seitenwand fluchten.

Ferner stellt die Erfindung bei einer Fertigmenüpackung der erfindungsgemäßen Art auch vor, dass mindestens drei Nahrungsmittelkomponenten vorgesehen sind.

Ferner kann bei einer Fertigmenüpackung der erfindungsgemäßen Art vorgesehen sein, dass mindestens einer der Nahrungsmittelkomponenten arm an Kohlenhydraten ist.

Das erfindungsgemäße Verfahren zum Herstellen einer Fertigmenüpackung der erfindungsgemäßen Art zeichnet sich dadurch aus, dass zunächst eine Anzahl von kreissegmentförmigen Nahrungsmittelkomponenten mit jeweils der für die betreffende Komponente definierten Nährstoffzusammensetzung ausgeformt werden; dass anschließend die geformten Komponenten tiefgefroren werden; dass daraufhin so viele Komponentenstücke entsprechender, zueinander komplementärer Form in das Basisteil eingelegt werden, dass der Boden des Basisteiles von den Nahrungsmittelkomponenten vollständig bedeckt ist, wobei die Nahrungsmittelkomponenten mit ihren kreissekantenartig geformten Seitenkanten bündig aneinander liegen und mit ihren gebogenen Seitenflächen an der divergierenden Seitenwand des Basisteiles anstoßen; und dass daraufhin auf den Randflansch eine Siegelfolie oder dergleichen aufgebracht wird. Eine Fertigmenüpackung der erfindungsgemässen Art ist ferner zur Verwendung in einem Verfahren zur nährstoffoptimierten Diätbehandlung von insbesonderen an Krebs erkrankten Patienten geeignet, wobei als wenigstens eine der Hauptmahlzeiten dem Patienten ein Fertigmenü mit wenigstens einer optimierten kohlenhydratlimitierten Komponente unter Verwendung einer Fertigmenüpackung nach einem der Ansprüche 1 - 4 verabreicht wird.

Der Erfindung liegt die überraschende Erkenntnis zugrunde, dass es gelingt, die erfindungsgemäße Aufgabe dadurch zu lösen, dass eine diätetisch optimierte Fertigmenüpackung dadurch geschaffen wird, dass in gänzlicher Abkehr von der schichtweisen Befüllung eines Basisteiles nach dem Stand der Technik, bei dem erst nach dem Befüllen des Basisteiles der Gefriervorgang erfolgt, einzelne in ihrer Gestalt und Größe aufeinander abgestimmte Nahrungsmittelkomponenten vorgeformt und tiefgefroren werden, die dann gleichsam baukastenähnlich in das Basisteil eingelegt werden können. Durch die unterschiedliche Formgebung der Nahrungsmittelkomponenten ist der Einlegevorgang "narrensicher", da sich der Boden des Basisteiles nur dann vollständig und lückenlos mit Nahrungsmittelkomponenten bedecken läßt, wenn tatsächlich die gewünschten "Bausteine" aus entsprechend bereitgestellten Vorratsbehältern oder dergleichen entnommen und in das Basisteil eingesetzt werden.

Dadurch ist es möglich, die Nahrungsmittelkomponenten an unterschiedlichen Herstellungsorten unter jeweils auf die betreffende Nährstoffzusammensetzung optimierten Herstellungsbedingungen vorzufertigen, beispielsweise auch bei unterschiedlichen Temperaturen, wobei dann erst am Befüllungsort des Basisteiles das Zusammenfügen der bausteinartig vorgefertigten Nahrungsmittelkomponenten erfolgt.

Hierdurch gelingt es, unterschiedliche Fertigmenüpackungen zu schaffen, die dem Patienten eine abwechslungsreiche Diät bieten.

Wenn die erfindungsgemäße Fertigmenüpackung zur nährstoffoptimierten Diätbehandlung angewendet wird, lassen sich z.B. Krebspatienten in für die positive Beeinflussung des Krankheitsverlaufes optimierter Weise diätetisch ernähren.

Weitere Merkmale und Vorteile der Erfindung ergeben sich aus den Ansprüchen und aus der nachstehenden Beschreibung, in der ein Ausführungsbeispiel der Erfindung anhand der schematischen Zeichnung im Einzelnen erläutert ist.

Dabei zeigt:
- Fig. 1: ein Ausführungsbeispiel einer Fertigmenüpackung nach der Erfindung im Transportzustand im Schnitt durch die normalerweise lotrechte Längsmittelachse; und
- Fig. 2: die Fertigmenüpackung von Figur 1 nach Abnehmen der Siegelfolie in der Draufsicht von oben, in Figur 1 gesehen.

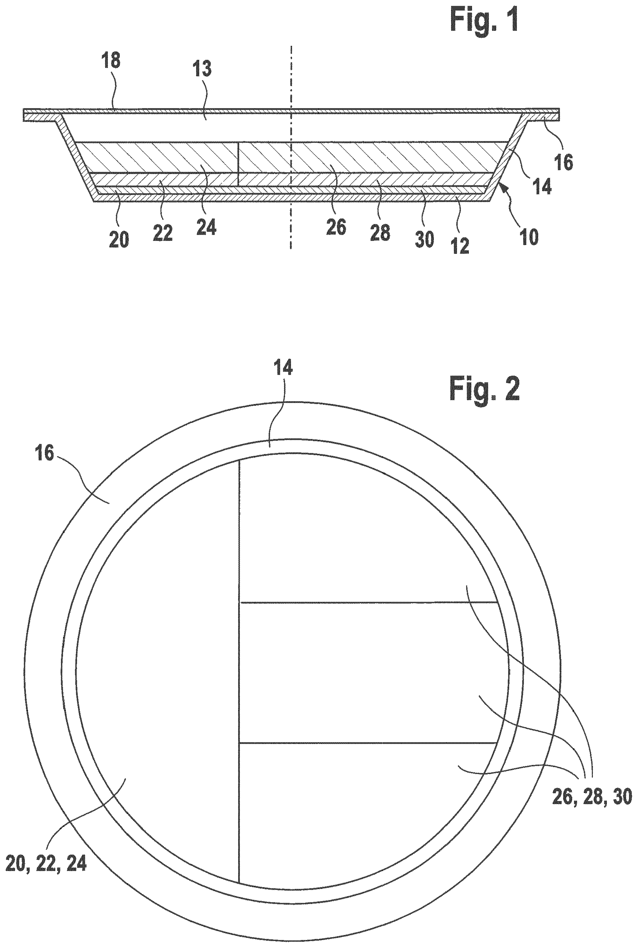

Wie Figur 1 erkennen läßt, weist die Fertigmenüpackung bei dem dort gezeigten Ausführungsbeispiel ein schalenförmiges Basisteil 10 auf, welches z.B. durch Pressstanzformung aus Pappe hergestellt ist. Das Basisteil 10 weist einen im Wesentlichen ebenen Boden 12 und eine in Figur 1 hiervon schräg nach oben divergierende, umlaufende Seitenwand 14 auf, die somit gemeinsam mit dem Boden 12 einen hohlkegelstumpfförmig geformten Schaleninnenraum 13 bildet.

Der Schaleninnenraum hat somit bei dem in Figur 1 gezeigten Ausführungsbeispiel schräg nach außen verlaufende, aber im Wesentlichen gerade Innenwände, könnte aber auch gekrümmte Innenwände haben, die dann durch eine gekrümmte Seitenwand 14 gebildet würden, die vom Boden 12 zu einem an die Seitenwand anschließendem umlaufenden Randflansch 16 in gekrümmter Form verlaufen.

Der Randflansch 16 ist im Wesentlichen eben ausgebildet und verläuft bei dem gezeigten Ausführungsbeispiel im Wesentlichen zum Boden 12. Es könnte im Übrigen in diesem Zusammenhang auch vorgesehen sein, dass die Seitenwand 14 nicht mit dem Boden 12 integral verbunden ist, sondern auf diesen lediglich in Form eines Kreisringes aufgesetzt ist, wobei dann die Fuge zwischen dem Boden 12 und der Seitenwand 14 beim Tieffrieren des Inhaltes des Schaleninnenraumes 13 - auf diesen Vorgang wird weiter unten noch eingegangen - , durch kristallisierende Flüssigkeit verschlossen werden könnte, unter Verbindung des Bodens 12 und der Seitenwand 14.

Von besonderer Bedeutung ist bei dem gezeigten Ausführungsbeispiel, dass in Folge der Materialwahl der Randflansch so ausgebildet ist, dass auf ihn in der aus der Zeichnung ersichtlichen Weise eine Siegelfolie 18 aufgesiegelt werden kann, nachdem in den Schaleninnenraum 13 vorgeformte und -gefrorene Nahrungsmittelkomponenten 20, 22, 24, 26, 28, 30, beim gezeigten Ausführungsbeispiel mehrschichtig ausgebildet, eingelegt worden sind.

In Figur 2 ist die Fertigmenüpackung von Figur 1 nach dem Abziehen der Siegelfolie 18 in der Draufsicht gezeigt. Wie dort zu erkennen ist, bestehen die aufeinander geschichteten Nahrungsmittelkomponenten 20, 22, 24 bzw. 26, 28, 30 jeweils aus Kreissegmenten, die nach dem Einlegen in das Basisteil 10 formschlüssig aneinander anliegen und den Boden 12 des Basisteiles 10 lückenlos bedecken. Die Nahrungsmittelkomponenten 20 - 30 sind vor dem Einfüllen bzw. Einlegen in das Basisteil 10 vorgeformt und tiefgefroren worden, und zwar unter Verwendung von Formen, die gewährleisten, dass die Außenkontur der einzelnen Nahrungsmittelkomponenten nach dem Einlegen ins Basisteil 10 zur vorbeschriebenen Konfiguration führt.

Hierdurch ist es möglich, die einzelnen Nahrungsmittelkomponenten 20 - 24 bzw. 26 - 30 kreissegmentartig unter optimalen Bedingungen herzustellen und zu gefrieren, beispielsweise an durchaus unterschiedlichen Herstellungsorten, die ggf. durchaus unterschiedlichen Reinheits- und Hygieneanforderungen entsprechen können.

Die Nahrungsmittelkomponenten in den einzelnen Segmenten sind diätetisch optimiert, wobei also beispielsweise die Nahrungsmittelkomponente 20, 22, 24 kohlenhydratarm zusammengesetzt sein kann, während die Nahrungsmittelkomponenten 26, 28, 30, die natürlich, wie aus Figur 2 ersichtlich, unterschiedliche Außenkonturen haben können, die der Innenkontur des Basisteiles 10 angepasst sind, eine unterschiedliche Zusammensetzung aufweisen können, beispielsweise also aus Fleisch, Fisch, Gemüse und dergleichen mit höherem Kohlenhydratgehalt bestehen.

Die Herstellung des Fertigmenüs nach Figur 1 und 2 erfolgt in der Weise, dass ein Basisteil 10 der obengenannten Art bereitgestellt wird, dass ferner die kreisbogensegmentartigen Nahrungsmittelkomponenten 20 - 30 in sinnreicher Weise zusammengesetzt, vorgegart und tiefgefroren werden, und dass alsdann die tiefgefrorenen Komponenten in das Basisteil 10 eingefüllt werden, woraufhin dann abschließend die Versiegelung durch die Siegelfolie 18 erfolgt.

Statt der Siegelfolie 18 kann im Übrigen natürlich auch vorgesehen sein, dass auf das Basisteil 10 bzw. dessen oberen Randflansch 16 ein Deckel mit anderer Art der Verbindung mit dem Randflansch 16 aufgelegt wird.

## Patentansprüche

1. Fertigmenüpackung mit einem im Wesentlichen kreisschalenförmigen Basisteil, dessen umlaufende Seitenwand von einem im Wesentlichen ebenen Boden zu ihrer Oberkannte nach außen divergiert und an ihrem oberen Rand in einen nach außen vorstehenden, im Wesentlichen ebenen, zum Boden parallelen Randflansch übergeht; einem in das Basisteil eingefüllten, mindestens zwei tiefgefrorene Komponenten unterschiedlicher Nährstoffzusammensetzung aufweisenden, vorzugsweise vorgegarten Fertigmenü und einer nach dem Einfüllen des Fertigmenüs auf den Randflansch aufgesiegelten Siegelfolie oder dergleichen, **dadurch gekennzeichnet, dass** die Nahrungsmittelkomponenten (20, 22, 24, 26, 28, 30) im Wesentlichen tortenstückartige Kreissegmentform haben und in Form und Größe derart aufeinander und auf die Innengestalt des Basisteils (10) abgestimmt sind, dass sie nach dem Vorformen und Tiefgefrieren beim Einlegen in das Basisteil (10), mit ihren kreissekantenartig verlaufenden, zum Boden (12) senkrechten Seitenkanten bündig aneinander liegend, im wesentlichen den Boden (12) des Basisteiles vollständig und lückenlos bedecken, mit ihren gebogenen Seitenflächen an der divergierenden Seitenwand des Basisteiles anstoßen und den Schaleninnenraum in Richtung des oberen Randes der Seitenwand (14) nicht überragen.

2. Fertigmenüpackung nach Anspruch 1, **dadurch gekennzeichnet, dass** die kreissegmentförmigen Nahrungsmittelkomponenten (20, 22, 24, 26, 28, 30) nach dem Einlegen in das Basisteil (10) mit der Oberkante der Seitenwand (14) fluchten.

3. Fertigmenüpackung nach Anspruch 1 oder 2, **dadurch gekennzeichnet, dass** mindestens drei Nahrungsmittelkomponenten (20-30) vorgesehen sind.

4. Fertigmenüpackung nach einem der vorangehenden Ansprüche, **dadurch gekennzeichnet, dass** die Nährstoffzusammensetzung mindestens einer der Nahrungsmittelkomponenten (20 - 30) arm an Kohlenhydraten ist.

5. Fertigmenüpackung nach einem der Ansprüche 1-4, zur Verwendung in einem Verfahren zur nährstoffoptimierten Diätbehandlung von insbesondere an Krebs erkrankten Patienten, wobei als wenigstens eine der Hauptmahlzeiten dem Patienten ein Fertigmenü mit wenigstens einer optimierten kohlenhydratlimitierten Komponente unter Verwendung einer Fertigmenüpackung nach einem der Ansprüche 1-4 verabreicht wird.

6. Verfahren zum Herstellen einer Fertigmenüpackung nach einem der vorangehenden Ansprüche, **dadurch gekennzeichnet, dass** zunächst eine Anzahl von kreissegmentförmigen Nahrungsmittelkomponenten mit jeweils der für die betreffende Komponente definierten Nährstoffzusammensetzung ausgeformt werden; dass anschließend die geformten Komponenten tiefgefroren werden; dass daraufhin so viele Komponentenstücke entsprechender, zueinander komplementärer Form in das Basisteil eingelegt werden, dass der Boden des Basisteiles von den Nahrungsmittelkomponenten vollständig bedeckt ist, wobei die Nahrungsmittelkomponenten mit ihren kreissekantenartig geformten Seitenkanten bündig aneinander liegen und mit ihren gebogenen Seitenflächen an der divergierenden Seitenwand des Basisteiles anstoßen; und dass daraufhin auf den Randflansch eine Siegelfolie oder dergleichen aufgebracht wird.

## Claims

1. Ready meal packaging with a base part essentially in the form of a circular tray, the surrounding side wall of which diverges outwards from an essentially flat bottom to the upper edge of the side wall, and on the upper rim of the side wall it transitions into an essentially flat rim flange that projects outwards and is parallel to the bottom; a preferably pre-cooked meal filled into the base part and having at least two deep-frozen components of different nutritional composition, and a sealing film or the like sealed onto the rim flange after the introduction of the ready meal,
**characterised in that**
the food components (20, 22, 24, 26, 28, 30) essentially have the shape of a segment of a circle like a slice of pie, and in terms of shape and size they are tailored to one another and to the interior shape of base part (10), such that after pre-forming and deep-freezing, when they are placed in the base part (10), the food components essentially cover the bottom (12) of the base part fully and without gaps, with their side edges, like segments of a circle and running perpendicular to the bottom (12), lying flush with one another, with the curved side faces of the food components abutting the divergent side wall of the base part and not projecting beyond the tray interior in the direction of the upper rim of the side wall (14).

2. Ready meal packaging according to claim 1, **characterised in that** the food components (20, 22, 24, 26, 28, 30) in the shape of segments of a circle being flush with the upper edge of the side wall (14) after insertion into the base part (10).

3. Ready meal packaging according to claim 1 or 2, **characterised in that** at least three food components (20 - 30) are envisaged.

4. Ready meal packaging according to at least one of the preceding claims, **characterised in that** the nutritional composition of at least one of the food components (20 - 30) is low in carbohydrates.

5. Ready meal packaging according to one of the claims 1-4, for use in a method for nutritionally optimised dietetic treatment of patients, particularly those with cancer, wherein as at least one of the main meals, the patient is given a ready meal with at least one optimised component with limited carbohydrate content, using a ready meal packaging according to one of the claims 1-4.

6. Method for producing a ready meal packaging according to one of the preceding claims, **characterised in that** in the first instance a number of food components shaped like the segments of a circle are formed in each case with the nutritional composition that is defined for the respective component; that subsequently the formed components are deep-frozen; that thereupon as many component pieces of a corresponding shape, complementary to one another, are placed into the base part such that the bottom of the base part is fully covered by the food components, wherein the food components, with their side edges like segments of a circle, lie flush against one another, and with their curved side faces the food components about the divergent side wall of the base part; and that thereupon a sealing film or the like is applied to the rim flange.

## Revendications

1. Emballage pour plats cuisinés doté d'une base qui se présente essentiellement sous forme de plateau circulaire, dont la paroi latérale environnante diverge vers l'extérieur à partir d'un fond essentiellement plat et vers le bord supérieur de la paroi latérale, et sur le bord supérieur de la paroi latérale elle devient un rebord essentiellement plat qui se projette vers l'extérieur et qui est parallèle au fond; un aliment de préférence cuisiné à l'avance rempli dans la base et comportant au moins deux éléments congelés ayant des compositions nutritionnelles différentes, et un film d'étanchéité ou autre élément similaire scellé sur le rebord après introduction du plat cuisiné,
**caractérisé en ce que**
les éléments de nourriture (20, 22, 24, 26, 28, 30) ont essentiellement la forme d'un segment de cercle semblable à une tranche de tourte, et en termes de forme et de grandeur, ils sont conçus l'un pour l'autre ainsi que pour la forme interne de la base (10), de telle manière qu'après le préformage et la congélation, les éléments de nourriture après avoir placés dans la base (10) recouvrent essentiellement le fond (12) de la base en totalité et sans intervalles, avec leurs bords latéraux, tout comme des segments de cercle et disposés perpendiculairement par rapport au fond (12), au même niveau les uns par rapport aux autres, les surfaces latérales recourbées des éléments de nourriture étant contigus à la paroi latérale divergente de la base et ne faisant pas saillie au-delà de l'intérieur du plateau dans le sens du bord supérieur de la paroi latérale (14).

2. Emballage pour plats cuisinés selon la revendication 1, **caractérisé en ce que** les éléments de nourriture (20, 22, 24, 26, 28, 30) sont sous forme de segments de cercle au même niveau que le bord supérieur de la paroi latérale (14) après insertion dans la base (10).

3. Emballage pour plats cuisinés selon la revendication 1 ou 2, **caractérisé en ce qu'**au moins trois éléments de nourriture (20 - 30) sont envisagés.

4. Emballage pour plats cuisinés selon au moins l'une quelconque des revendications précédentes, **caractérisé en ce que** la composition nutritionnelle d'au moins l'un des éléments de nourriture (20 - 30) comprend une faible teneur en carbohydrates.

5. Emballage pour plats cuisinés selon l'une quelconque des revendications 1-4, utilisable lors d'un procédé de traitement diététique nutritionnellement optimisé pour les patients, surtout ceux atteints d'un cancer, **caractérisé en ce qu'**au moins lors d'un repas principal, le patient se voit servir un plat cuisiné ayant au moins un élément optimisé qui contient une quantité limitée de carbohydrate, dans un emballage pour plats cuisinés selon l'une quelconque des revendications 1-4.

6. Procédé de production d'un emballage pour plats cuisinés selon l'une quelconque des revendications précédentes, **caractérisé en ce que**, en premier lieu, plusieurs éléments de nourriture qui ont la forme de segments de cercle soient réalisés dans chaque cas avec la composition nutritionnelle qui est définie pour l'élément respectif; que par la suite les éléments formés soient congelés; et qu'à ce moment le plus grand nombre d'éléments de forme correspondante, et qui sont complémentaires les uns par rapport aux autres, soient placés dans la base de telle manière que le fond de la base soit totalement recouvert par les éléments de nourriture, **caractérisé en ce que** les éléments de nourriture, dont les bords latéraux ressemblent à des segments de cercle, se trouvent au même niveau les uns par rapport aux autres, et que leur côté recourbé soit tourné vers les éléments de nourriture autour de la paroi latérale divergente de la base; et qu'à ce moment-là un film d'étanchéité ou autre élément similaire soit appliqué sur le rebord.
